(19) Europäisches Patentamt
European Patent Office
Office européen des brevets

(11) Numéro de publication: **0 051 334**
**A1**

(12) # DEMANDE DE BREVET EUROPEEN

(21) Numéro de dépôt: **81201180.7**

(51) Int. Cl.³: **C 08 L 27/06**

(22) Date de dépôt: **26.10.81**

(30) Priorité: **05.11.80 FR 8023677**
**10.11.80 FR 8024005**

(43) Date de publication de la demande:
**12.05.82 Bulletin 82/19**

(84) Etats contractants désignés:
**AT BE CH DE FR GB IT LI LU NL SE**

(71) Demandeur: **SOLVAY & Cie (Société Anonyme)**
**Rue du Prince Albert, 33**
**B-1050 Bruxelles(BE)**

(72) Inventeur: **Guyaux, Jean**
**Rue Vanderhoeft, 7**
**B-1030 Bruxelles(BE)**

(74) Mandataire: **Eischen, Roland**
**Solvay & Cie Département de la Propriété Industrielle**
**Rue de Ransbeek 310**
**B-1120 Bruxelles(BE)**

(54) **Compositions à base de polymères du chlorure de vinyle stabilisées à la chaleur.**

(57) Compositions à base de polymères du chlorure de vinyle stabilisées à la chaleur comprenant un stabilisant thermique primaire usuel tel qu'un système calcium-zinc, un diphosphite de bis(alkylphényl)pentaérythritol et, comme costabilisant une 2,6-dialkyl, 3,5-dicarbalkoxy, 1,4-dihydropyridine ou une bêta-dicétone. Ces compositions présentent une bonne stabilité thermique initiale et conviennent pour la fabrication d'emballages.

EP 0 051 334 A1

Croydon Printing Company Ltd

# Compositions à base de polymères du chlorure de vinyle stabilisées à la chaleur

Cas S.80/11-12

SOLVAY & Cie (Société Anonyme)

La présente invention concerne des compositions à base de polymères du chlorure de vinyle stabilisées à la chaleur, et plus particulièrement, de telles compositions comprenant un stabilisant thermique primaire usuel et un diphosphite de bis(alkylphényl) pentaérythritol.

La stabilité thermique d'une composition polymérique s'évalue généralement à court terme et à long terme. La stabilité thermique à court terme, ou stabilité thermique initiale, est l'aptitude de la composition à résister à la dégradation provoquée par l'élévation de température à laquelle il faut soumettre la composition pour la mettre en oeuvre et obtenir des objets façonnés. La stabilité thermique à long terme est l'aptitude de la composition à résister à la dégradation dans les conditions d'utilisation des objets façonnés à partir de la composition.

Une mauvaise stabilité thermique initiale se marque par une altération de la coloration des objets façonnés qui est d'autant plus importante que la stabilité est faible et que les compositions ont été maintenues à température élevée plus longtemps.

Pour de nombreuses applications des compositions à base de polymères du chlorure de vinyle, telles que la fabrication de corps creux et de feuilles calandrées destinés à l'emballage, il est impérieux de disposer de compositions qui présentent, non seulement une excellente stabilité thermique à long terme, mais également une bonne stabilité thermique initiale.

Dans le brevet GB-A- 1 526 603, (Borg Warner Corporation), on décrit l'utilisation de diphosphites de bis(alkylphényl) pentaérythritol pour accroître l'effet stabilisant de stabilisants thermiques primaires usuels mis en oeuvre dans des compositions à base de polymères du chlorure de vinyle. De fait, les diphosphites

précités constituent de bons stabilisants thermiques secondaires des polymères du chlorure de vinyle dans la mesure où ils améliorent la stabilité thermique initiale des compositions à base de polymères du chlorure de vinyle contenant des stabilisants thermiques primaires usuels, et donc la coloration des objets façonnés, sans affecter défavorablement la stabilité thermique à long terme.

De plus, les diphosphites de bis(alkylphényl)pentaérythritol présentent une résistance à la dégradation thermique et à l'hydrolyse élevée. Dès lors, ils devraient très bien convenir pour être mis en oeuvre comme stabilisant thermique secondaire dans des compositions à base de polymères du chlorure de vinyle destinées à la fabrication d'articles servant à l'emballage. Malheureusement, pareilles compositions présentent un inconvénient sérieux. En effet, leur stabilité thermique initiale n'est bonne que si elles sont portées à température élevée pendant une durée limitée, de quelques minutes au plus. Il en résulte que les possibilités de recyclage de ces compositions, qui impliquent nécessairement des durées totales de mise en oeuvre relativement longues, sont limitées et que ces compositions ne peuvent pas être mises en oeuvre dans des conditions impliquant leur maintien prolongé à température élevée.

La présente invention a pour but de procurer des compositions à base de polymères du chlorure de vinyle stabilisées à la chaleur qui présentent une bonne stabilité thermique initiale même lorsqu'elles sont portées à une température élevée pendant une durée relativement importante et qui possèdent les qualités des compositions connues. Selon l'invention, ces compositions comprennent, en plus d'un stabilisant thermique primaire usuel et d'un diphosphite de bis(alkylphényl)pentaérythritol, comme costabilisant au moins un composé choisi parmi les 2,6-dialkyl, 3,5-dicarbalkoxy, 1,4-dihydropyridines et les bêta-dicétones.

Les 2,6-dialkyl, 3,5-dicarbalkoxy, 1,4-dihydropyridines utilisables dans les compositions selon l'invention répondent à la formule générale

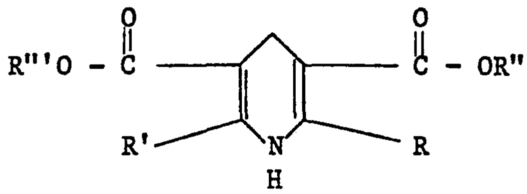

dans laquelle R, R', R", R"' représentent des groupements alkyles, identiques ou différents, contenant de 1 à 18 atomes de carbone.

On donne la préférence aux produits dont les substituants R et R' représentent un radical méthyle et les substituants R" et R"' un radical alkyle linéaire en $C_8$ à $C_{18}$. Un dérivé de dihydropyridine tout particulièrement préféré est la 2,6-diméthyl, 3,5-dicarbododécyloxy, 1,4-dihydropyridine.

Les bêta-dicétones utilisables dans les compositions selon l'invention répondent à la formule générale

$$R_1 - CO - CHR_2 - CO - R_3$$

dans laquelle $R_1$ et $R_2$ représentent un substituant hydrocarboné et $R_2$ représente un substituant hydrocarboné ou un atome d'hydrogène. A titres d'exemples de pareils substituants, on peut mentionner les groupements aliphatiques, aromatiques ou cycloaliphatiques.

Des bêta-dicétones utilisées avantageusement dans les compositions conformes à l'invention répondent à la formule générale

$$R_1 - CO - CHR_2 - CO - R_3$$

dans laquelle $R_1$ et $R_3$ représentent un groupementalkyle ou alkényle, linéaire ou ramifié, contenant de 1 à 36 atomes de carbone, un groupement aralkyle ou alkaryle contenant de 7 à 36 atomes de carbone, un groupement aryle ou un groupement cycloaliphatique saturé ou insaturé et $R_2$ représente un atome d'hydrogène ou un groupement alkyle ou alkényle, linéaire ou ramifié, contenant de 1 à 36 atomes de carbone.

Ont la préférence, les bêta-dicétones dont le substituant $R_1$ représente un groupement aryle ou un groupement alkaryle dont le substituant alkyle linéaire contient de 1 à 8 atomes de carbone, le substituant $R_3$ représente un groupement alkyle linéaire

contenant de 8 à 18 atomes de carbone et le substituant $R_2$ représente un groupement alkyle linéaire contenant de 1 à 8 atomes de carbone ou un atome d'hydrogène. Des produits particulièrement préférés sont ceux dont le substituant $R_1$ représente un groupement phényle, le substituant $R_3$ un groupement alkyle linéaire contenant de 8 à 18 atomes de carbone et le substituant $R_2$ un atome d'hydrogène. A titres d'exemples de pareils produits, on peut citer le lauroylbenzoylméthane, le myristoylbenzoylméthane, le palmitoylbenzoylméthane et le stéaroylbenzoylméthane. Une bêta-dicétone tout particulièrement préférée est le stéaroylbenzoylméthane.

Les quantités totales de dérivé de dihydropyridine et de bêta-dicétone (costabilisant) présentes dans les compositions selon l'invention ne sont pas critiques. L'utilisation de quantités aussi faibles que 0,01 partie au total de costabilisant pour 100 parties en poids de polymère du chlorure de vinyle conduit généralement déjà à une amélioration appréciable. L'utilisation de quantités plus élevées de costabilisant accentue les effets observés. Habituellement, il est sans intérêt de dépasser une teneur de 1 partie au total de costabilisant pour 100 parties de polymère du chlorure de vinyle. A l'intérieur de cette zone de concentrations (0,01 à 1 partie), la concentration optimale peut être avantageusement déterminée par voie expérimentale dans chaque cas particulier. Cette concentration dépend, entre autres, du polymère du chlorure de vinyle utilisé, du type de formulation et du domaine d'application envisagé. En général, on utilise de 0,02 à 0,6 partie au total de costabilisant.

Par ailleurs, les compositions selon l'invention peuvent comprendre plusieurs 2,6-dialkyl, 3,5-dicarbalkoxy, 1,4-dihydropyridines différentes ou plusieurs bêta-dicétones ou encore un mélange des composés précités.

Les diphosphites de bis(alkylphényl)pentaérythritol utilisés dans les compositions conformes à l'invention répondent à la formule générale

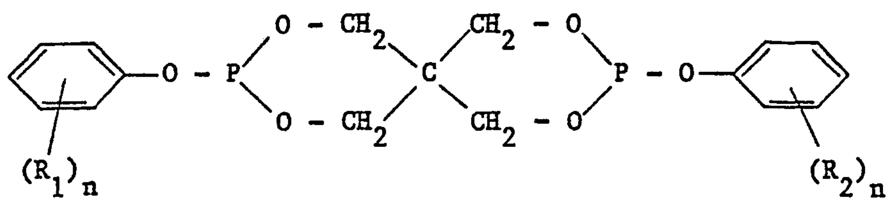

dans laquelle $R_1$ et $R_2$ représentent un groupement alkyle comprenant de 3 à 10 atomes de carbone et n représente un nombre entier allant de 1 à 3.

Ont la préférence les produits pour lesquels n est égal à 2, et plus particulièrement encore, ceux dont les groupements alkyles $R_1$ et $R_2$ sont tertiaires, c'est-à-dire les diphosphites de bis(dialkylphényl)pentaérythritol à substituants alkyles tertiaires. A titre d'exemples de pareils produits, on peut citer les diphosphites de bis(2,4-di-tert-amylphényl)-, de bis(2,4-di-tert-butylphényl)- et de bis(2,6-di-tert-butylphényl) pentaérythritol. Un produit préféré est le diphosphite de bis(2,4-di-tert-butylphényl)pentaérythritol.

La quantité de diphosphite présente dans les compositions selon l'invention n'est pas critique. Habituellement, on utilise de 0,1 à 2 partie de diphosphite pour 100 parties en poids de polymère du chlorure de vinyle. De préférence, on en utilise de 0,25 à 1 partie.

Par ailleurs, tous les stabilisants thermiques primaires usuels des polymères du chlorure de vinyle conviennent généralement à la réalisation de compositions selon l'invention. A titre d'exemples de pareils stabilisants primaires, on peut citer les sels organiques et inorganiques de plomb, les organo-étains, ainsi que les systèmes baryum-cadmium et calcium-zinc. Une liste non limitative de stabilisants thermiques primaires usuels des polymères du chlorure de vinyle utilisables est reprise dans l'ouvrage de H.A.Sarvetnick, Reinhold Plastics Application Series, 1969 (p.98-99).

Des compositions préférées selon la présente invention contiennent comme stabilisant thermique primaire un système calcium-zinc comprenant un composé de calcium associé à un composé de zinc. Ces compositions conviennent tout particulièrement pour

la fabrication d'emballages tels que des feuilles calandrées ou des corps creux transparents présentant une excellente coloration initiale.

A titre d'exemples de systèmes calcium-zinc, on peut citer ceux à base de savons de calcium et de zinc. Avantageusement, on utilise des sels de zinc et de calcium d'acides aliphatiques monocarboxyliques ayant de 6 à 30 atomes de carbone tels que par exemple les acides stéarique, palmitique, 2-éthylhexanoïque etc. La proportion relative du calcium au zinc est généralement comprise entre 1 et 5 atomes de calcium pour 1 atome de zinc.

Les doses des stabilisants thermiques primaires sont celles utilisées usuellement. On incorpore donc généralement de 0,1 à 10 parties en poids de stabilisant thermique primaire dans 100 parties de polymère et, de préférence, de 0,2 à 1 partie en poids de stabilisant thermique primaire dans 100 parties de polymère .

Des compositions tout particulièrement préférées selon la présente invention contiennent donc suivant le domaine d'application, de 0,02 à 0,6 partie au total de costabilisant tel que défini ci-dessus, ainsi que de 0,25 à 1 partie de diphosphite de bis(alkylphényl)pentaérythritol tel que défini ci-dessus et de 0,2 à 1 partie pour 100 parties de polymère du chlorure de vinyle d'un stabilisant thermique primaire du type des systèmes calcium-zinc.

Il est entendu que les compositions selon l'invention peuvent contenir d'autres ingrédients tels que par exemple, des agents facilitant la mise en oeuvre, des agents renforçants, des pigments ou des lubrifiants usuels des polymères du chlorure de vinyle.

Par polymères du chlorure de vinyle, on entend désigner tous les polymères contenant au moins 50 % molaires, et de préférence au moins 70 % molaires, d'unités monomériques dérivées du chlorure de vinyle. Les polymères du chlorure de vinyle qui conviennent à la réalisation des compositions selon l'invention comprennent donc aussi bien les homopolymères du chlorure de vinyle que ses copolymères contenant des unités monomériques dérivées d'un ou de

plusieurs comonomères. Ces copolymères peuvent être des copolymères statistiques, des copolymères à blocs ou encore des copolymères greffés sur un tronc quelconque. A titre d'exemples de comonomères du chlorure de vinyle, on peut citer les oléfines telles que l'éthylène, le propylène et le styrène, les esters tels que l'acétate de vinyle et les acrylates et les méthacrylates d'alkyle, les dérivés vinylidéniques tels que le chlorure et le fluorure de vinylidène.

De préférence, les compositions suivant l'invention sont à base d'homopolymères du chlorure de vinyle.

Le mode de fabrication des polymères du chlorure de vinyle mis en oeuvre peut être quelconque. On peut donc utiliser indifféremment pour la fabrication de compositions selon l'invention des polymères du chlorure de vinyle obtenus par polymérisation en masse, en phase gazeuse, en solution ou encore en émulsion ou en suspension aqueuses.

L'incorporation des stabilisants thermiques dans le polymère du chlorure de vinyle ne pose aucun problème particulier. Ceux-ci sont mélangés avec le polymère, de manière connue en soi, par exemple au moment de la fabrication du prémélange. Un mode opératoire particulièrement avantageux pour la fabrication de compositions selon l'invention consiste à mélanger sur mélangeur rapide le polymère du chlorure de vinyle avec les ingrédients solides de la composition (comprenant notamment le diphosphite et le costabilisant) et à incorporer à ce mélange, lorsque sa température a atteint 60°C environ, les ingrédients liquides de la composition. On continue alors à faire tourner le mélangeur rapide jusqu'à ce que le mélange final ait atteint une température de 100 à 125°C environ avant de le décharger dans un mélangeur lent pour le refroidir jusqu'à 30°C environ.

Les compositions stabilisées à la chaleur conformes à l'invention sont aptes à la mise en oeuvre par tous les procédés classiques de transformation des matières plastiques. Ces compositions conviennent tout particulièrement pour la fabrication de feuilles et de corps creux - flacons, bouteilles et autres récipients - destinés à l'emballage de liquides et de solides.

Dans le cas où le stabilisant primaire est un système calcium-zinc, elles conviennent tout particulièrement pour la fabrication de corps creux, tels que des bouteilles transparentes et peu ou pas colorées pour le conditionnement de liquides alimentaires, tels que le vinaigre, l'huile et l'eau, par extrusion-soufflage à l'aide de machines fonctionnant à cadence élevée.

Exemples

Les exemples qui suivent illustrent l'invention.

Dans les exemples 1 à 4, on a utilisé comme polymère du chlorure de vinyle un polychlorure de vinyle de nombre K (mesuré dans la cyclohexanone à 25°C) égal à 58 obtenu par polymérisation en suspension aqueuse. Dans les exemples 5 et 6, on a utilisé un polychlorure de vinyle de nombre K (mesuré dans la cyclohexanone à 25°C) égal à 63 obtenu par polymérisation en suspension aqueuse.

Les compositions ont été fabriquées suivant le mode opératoire décrit plus haut.

Dans les exemples 1 et 2 on a évalué la composition suivante :

| | | | | |
|---|---|---|---|---|
| - polychlorure de vinyle | 100 | parties | en | poids |
| - modifiant acrylique | 7,35 | " | " | " |
| - huile de soya époxydée | 5 | " | " | " |
| - cire de polyéthylène | 0,2 | " | " | " |
| - ester de glycérol | 2 | " | " | " |
| - stéarate de calcium | 0,30 | " | " | " |
| - éthylhexanoate de zinc (à 23% de zinc) | 0,11 | " | " | " |
| - mélange maître contenant un pigment d'azurage | 1 | " | " | " |
| - diphosphite de bis(2,4-di-tert-butylphényl)pentaérythritol | 0,50 | " | " | " |
| - 2,6-diméthyl, 3,5-dicarbododécyloxy, 1,4-dihydropyridine (DHP) | voir Tableau I | | | |

L'exemple 1 concerne une composition selon l'invention comprenant un dérivé de dihydropyridine. L'exemple 2, donné à titre de comparaison, concerne une compositions ne comprenant pas de dérivé de dihydropyridine.

Dans les exemples 3 et 4, on a évalué la composition suivante :

| | | |
|---|---|---|
| - polychlorure de vinyle | 100 | parties en poids |
| - modifiant acrylique | 8,5 | " " " |
| - huile de soya époxydée | 6 | " " " |
| - cire de polyéthylène | 0,2 | " " " |
| - ester de glycérol | 2,5 | " " " |
| - stéarate de calcium | 0,26 | " " " |
| - éthylhexanoate de zinc (à 23% de zinc) | 0,12 | " " " |
| - acide sorbique | 0,025 | " " " |
| - pigment d'azurage | 0,076 | " " " |
| - diphosphite de bis(2,4-di-tert-butylphényl)pentaérythritol | 0,50 | " " " |
| - stéaroylbenzoylméthane(bêta-dicétone) | voir Tableau II | |

L'exemple 3 concerne une composition selon l'invention comprenant une bêta-dicétone. L'exemple 4, donné à titre de comparaison, concerne une composition ne comprenant pas de bêta-dicétone.

Dans les exemples 5 et 6, on a évalué la composition suivante :

| | | |
|---|---|---|
| - polychlorure de vinyle | 100 | parties en poids |
| - modifiant acrylique | 1 | " " " |
| - huile de soya époxydée | 3,3 | " " " |
| - cire de polyéthylène | 0,3 | " " " |
| - ester de glycérol | 2 | " " " |
| - ester montanique | 0,1 | " " " |
| - montanate de calcium | 0,35 | " " " |
| - éthylhexanoate de zinc (à 23% de zinc) | 0,065 | " " " |
| - mélange maître contenant un pigment d'azurage | 0,7 | " " " |
| - diphosphite de bis(2,4-di-tert-butylphényl)pentaérythritol | 0,50 | " " " |
| - stéaroylbenzoylméthane(bêta-dicétone) | voir Tableau III | |
| - 2,6-diméthyl, 3,5-dicarbododécyloxy, 1,4-dihydropyridine (DHP) | voir Tableau III | |

L'exemple 5 concerne une composition selon l'invention comprenant une bêta-dicétone et un dérivé de dihydropyridine. L'exemple 6, donné à titre de comparaison, concerne une composition ne comprenant pas de bêta-dicétone, ni de dérivé de dihydropyridine.

La stabilité thermique initiale et son évolution au cours du temps sont évaluées sur des crêpes obtenus par malaxage des compositions à 200°C sur un malaxeur à deux cylindres.

Dans les exemples 1 à 4, on a déterminé l'indice de jaune (IJ) de ces crêpes à divers intervalles au moyen d'un photomètre de marque "Elrepho".
L'indice de jaune se définit comme suit :

$$IJ = \frac{R-B}{V}$$

R représentant la réflectance en lumière rouge de l'échantillon, exprimée en %, par rapport à l'oxyde de magnésium,
B représentant la réflectance en lumière bleue de l'échantillon, exprimée en %, par rapport à l'oxyde de magnésium, et
V représentant la réflectance en lumière verte de l'échantillon, exprimée en %, par rapport à l'oxyde de magnésium.

Dans les exemples 5 et 6, on a apprécié visuellement la coloration intiale et son évolution au cours du temps.

La stabilité thermique à long terme, également évaluée sur malaxeur à 200°C, est déterminée par la mesure du temps qui s'écoule avant que le crêpe noircisse.

Les résultats de l'évaluation des stabilités thermiques des compositions sont consignés dans les Tableaux I, II et III.

La comparaison des résultats des exemples selon l'invention avec ceux donnés à titre de comparaison montre l'amélioration de la stabilité thermique initiale et la prolongation appréciable de l'effet de stabilisation thermique initiale que procurent les compositions selon l'invention.

TABLEAU I

| N° de l'exemple | DHP | Stabilités thermiques | | | | | |
|---|---|---|---|---|---|---|---|
| | | A court terme IJ mesuré après malaxage du crêpe à 200°C pendant | | | | | A long terme noircissement du crêpe après malaxage à 200°C pendant |
| | | 2 min | 3 min | 4 min | 5 min | 7 min | |
| 1 | 0,05 | -34,5 | -30,1 | -30,4 | -21,4 | +30,8 | 22 min. 38 sec. |
| 2 | néant | -13,7 | - 8,4 | + 5,6 | +24,3 | +68,7 | 19 min. 12 sec. |

TABLEAU II

| N° de l'exemple | Dicétone | Stabilités thermiques | | | | | |
|---|---|---|---|---|---|---|---|
| | | A court terme IJ mesuré après malaxage du crêpe à 200°C pendant | | | | | A long terme noircissement du crêpe après malaxage à 200°C pendant |
| | | 2 min | 3 min | 4 min | 5 min | 7 min | |
| 3 | 0,05 | -17,3 | -14,3 | - 9,6 | - 3,2 | +16,6 | 32 min. 20 sec. |
| 4 | néant | -10,6 | - 2,6 | + 0,1 | + 3,4 | +16,6 | 37 min. 04 sec. |

TABLEAU III

| N° de l'exemple | DHP | Dicétone | Stabilités thermiques | | | | | |
|---|---|---|---|---|---|---|---|---|
| | | | A court terme<br>Coloration appréciée visuellement après malaxage du crêpe à 200°C pendant | | | | | A long terme<br>noircissement du crêpe après malaxage à 200°C pendant |
| | | | 2 min | 3 min | 4 min | 5 min | 7 min | |
| 5 | 0,1 | 0,4 | incolore | incolore | très légèrement jaune | légèrement jaune | jaune | 17 min |
| 6 | néant | néant | incolore | très légèrement jaune | légèrement jaune | très jaune | rougeâtre | 17 min |

## REVENDICATIONS

1 - Compositions à base de polymères du chlorure de vinyle stabilisées à la chaleur comprenant un stabilisant thermique primaire usuel et un diphosphite de bis(alkylphényl) pentaérythritol, caractérisées en ce qu'elles contiennent en outre comme costabilisant au moins un composé choisi parmi les 2,6-dialkyl, 3,5-dicarbalkoxy, 1,4-dihydropyridines et les bêta-dicétones.

2 - Compositions selon la revendication 1, caractérisées en ce que la 2,6-dialkyl, 3,5-dicarbalkoxy, 1,4-dihydropyridine est une 2,6-diméthyl-, 3,5-dicarbalkoxy, 1,4-dihydropyridine dont les groupements alkyles des groupements substituants carbalkoxy comprennent de 8 à 18 atomes de carbone.

3 - Compositions selon la revendication 2, caractérisées en ce que la 2,6-diméthyl, 3,5-dicarbalkoxy, 1,4-dihydropyridine est la 2,6-diméthyl, 3,5-dicarbododécyloxy, 1,4-dihydropyridine.

4 - Compositions selon la revendication 1, caractérisées en ce que la bêta-dicétone répond à la formule générale

$$R_1 - CO - CHR_2 - CO - R_3$$

dans laquelle $R_1$ représente un groupement aryle ou un groupement alkaryle dont le substituant alkyle linéaire contient de 1 à 8 atomes de carbone, $R_3$ représente un groupement alkyle linéaire contenant de 8 à 18 atomes de carbone et $R_2$ représente un groupement alkyle linéaire contenant de 1 à 8 atomes de carbone ou un atome d'hydrogène.

5 - Compositions selon la revendication 4, caractérisées en ce que $R_1$ représente un groupement phényle, $R_3$ représente un groupement alkyle linéaire contenant de 8 à 18 atomes de carbone et $R_2$ représente un atome d'hydrogène.

6 - Compositions selon la revendication 5, caractérisées en ce que la bêta-dicétone est le stéaroylbenzoylméthane.

7 - Compositions selon l'une quelconque des revendications 1 à 6, caractérisées en ce qu'elles contiennent de 0,02 à 0,6 partie de costabilisant pour 100 parties en poids de polymère du chlorure de vinyle.

8 - Compositions selon l'une quelconque des revendications 1 à 7, caractérisées en ce que le diphosphite de bis(alkylphényl) pentaérythritol est un diphosphite de bis(dialkylphényl)pentaérythritol dont les groupements alkyles comprennent de 3 à 10 atomes de carbone et est utilisé à raison de 0,25 à 1 partie pour 100 parties en poids de polymère du chlorure de vinyle.

9 - Compositions selon la revendication 8, caractérisées en ce que le diphosphite de bis(dialkylphényl)pentaérythritol est le diphosphite de bis(2,4-di-tert-butylphényl)pentaérythritol.

10 - Compositions selon l'une quelconque des revendications 1 à 9, caractérisées en ce que le stabilisant thermique primaire est un système calcium-zinc comprenant un composé de calcium associé à un composé de zinc et est utilisé à raison de 0,2 à 1 partie pour 100 parties en poids de polymère du chlorure de vinyle.

0051334

Office européen des brevets

# RAPPORT DE RECHERCHE EUROPEENNE

Numéro de la demande

EP 81 20 1180

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US - A - 4 244 848 (MONOBOTU MINAGAWA)(13-01-1981)<br>* Exemples, revendications, colonne 13, lignes 6-7 *<br>& JP - A - 79 10 2348 (ARGUS CHEMICAL) (11-08-1979)<br>---- | 1-7,10 | C 08 L 27/06 |

DOMAINES TECHNIQUES RECHERCHES (Int. Cl. 3)

C 08 L 27/06

CATEGORIE DES DOCUMENTS CITES

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 02-02-1982 | FOUQUIER |